# EUROPEAN PATENT APPLICATION

(11) **EP 3 228 887 A1**
(43) Date of publication of application: **11.10.2017**
(21) Application number: 14907524.4
(22) Date of filing: 01.12.2014
(51) Int. Cl.: F16C 33/10, F16N 29/00

(54) **GREASING MECHANISM FOR MAIN ELECTRIC MOTOR OF VEHICLE**

(71) Applicant: Mitsubishi Electric Corporation, Chiyoda-ku Tokyo 100-8310 (JP)
(72) Inventor: HORIUCHI Kiyoshi, Tokyo 100-8310 (JP)
(74) Representative: Witte, Weller & Partner Patentanwälte mbB
(86) International application number: PCT/JP2014/081708
(87) International publication number: WO 2016/088165

(57) **Abstract**

A greasing mechanism (1) for a main electric motor of a vehicle includes a greasing tube (10) that is filled with a semi-solid lubricant and has an indicator member (13) within the greasing tube (10). The indicator member (13) has a specific gravity that is smaller than that of the semi-solid lubricant and moves in a greasing direction from a first position 1 due to pressure of the semi-solid lubricant during greasing. The greasing mechanism (1) includes a retaining part that has a shape that stops at a second position the indicator member (13) moving during greasing. An indicator window (14) arranged in a portion of the greasing tube (10) including the second position is formed from a component that is at least partially transparent to visible light.

## Description

### Technical Field

The present disclosure relates to a greasing mechanism for a main electric motor of a vehicle.

### Background Art

An obligation exists for conducting periodic inspection of a main electric motor of an electric railway vehicle. Generally the main electric motor is removed from the vehicle every four years, the main electric motor is disassembled, the bearing parts are cleaned, and the bearing parts are repacked with grease. In recent years in order to reduce maintenance costs, a greasing port is provided for supplying grease to the bearing parts, grease is supplied at four years after the commencement of operation, and grease is repacked at eight years after the commencement of operation.

The external appearance of the main electric motor cannot be used to determine whether grease is previously supplied. Thus the determination of whether grease is previously supplied is made on the basis of a means such as a maintenance work log. When there is an error in an entry in the maintenance work log, lubrication failure may occur due to an excessive or insufficient amount of grease.

A bearing device disclosed in Patent Literature 1 is equipped with a lubricating oil introduction tube for increasing fluidity of grease by heating grease supplied to an interior-side tubular space of a double-tubular structure, the heating being by an operation fluid sealed in a tubular space to an exterior-side of the double-tubular structure. Due to arrangement of an oil level gauge in the lubricating oil introduction tube, residual amount of grease in this bearing device can be checked.

### Citation List

### Patent Literature

Patent Literature 1: Unexamined Japanese Patent Application Kokai Publication No. H08-086317

### Summary of Invention

### Technical Problem

The bearing device disclosed in Patent Literature 1 requires the lubricating oil introduction tube that has the double-tubular structure, and structure of the bearing device is complex.

The present disclosure is developed in consideration of the aforementioned circumstances, and the objective of the present disclosure is to use a more simple structure to make possible the indication of the status of greasing of the main electric motor of the vehicle.

### Solution to Problem

In order to attain the aforementioned objective, a greasing mechanism for a main electric motor of a vehicle of the present disclosure includes a greasing tube, an indicator member, and a retaining part. One end of the greasing tube is connected to a bearing of the main electric motor of the vehicle, a greasing port is arranged at another end of the greasing tube, and the greasing tube is filled with a semi-solid lubricant. The indicator member is arranged at a predetermined first position within the greasing tube filled with the semi-solid lubricant, and the indicator member has a specific gravity that is lower than a specific gravity of the semi-solid lubricant. The indicator member moves in a greasing direction due to pressure of the semi-solid lubricant during greasing, and the retaining part is shaped to stop the indicator member at a second position during greasing. A portion of the greasing tube including the second position is formed from a component that at least partially transmits visible light.

### Advantageous Effects of Invention

According to the present disclosure, an indicator member is arranged that moves within the greasing tube due to the pressure of the semi-solid lubricant during greasing, and thus the status of greasing of the main electric motor of the vehicle can be indicated using a more simple structure.

### Brief Description of Drawings

FIG. 1 is a cross sectional drawing of a main electric motor of a vehicle and a greasing mechanism for the main electric motor of the vehicle according to an embodiment of the present disclosure;
FIG. 2 is a drawing illustrating an example configuration of the greasing mechanism according to the embodiment;
FIG. 3 is a cross sectional drawing of the greasing mechanism according to the embodiment;
FIG. 4 is a drawing illustrating movement of an indicator member in the embodiment;
FIG. 5 is a cross sectional drawing illustrating movement of the indicator member in the embodiment; and
FIG. 6 is a drawing illustrating another example configuration of the greasing mechanism according to the embodiment.

### Description of Embodiments

Embodiments of the present disclosure are described below in detail in reference to figures. In the figures, components that are the same or equivalent are assigned the same reference signs.

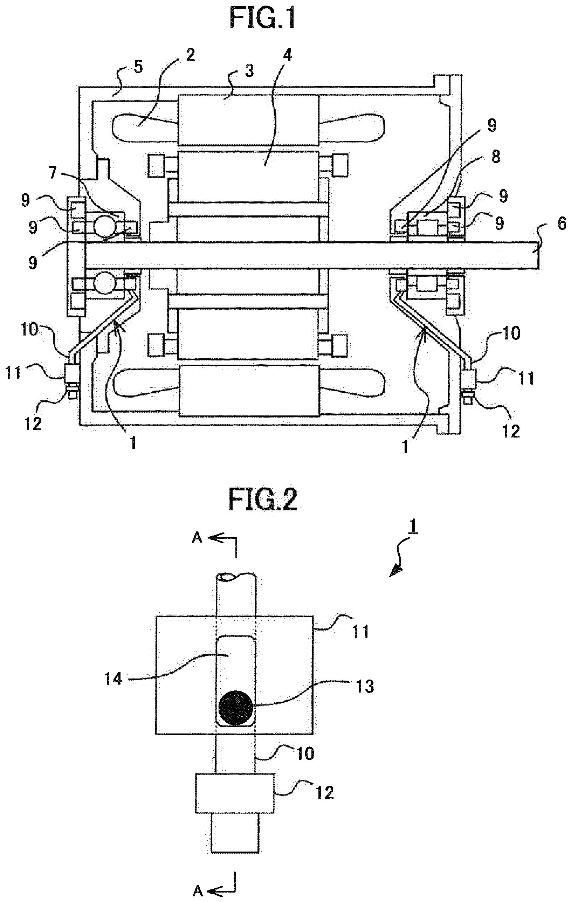

FIG. 1 is a cross sectional drawing of a main electric motor of a vehicle and a greasing mechanism for the main electric motor of the vehicle according to an embodiment of the present disclosure. The greasing mechanism 1 for the main electric motor of the vehicle (referred to hereinafter as the "greasing mechanism") includes a greasing tube 10 that is filled with a semi-solid lubricant and that has therein an indicator member that moves in a greasing direction due to pressure of the semi-solid lubricant during greasing, and an indicator part 11 that makes possible external visual confirmation of the movement of the indicator member. Thus the status of greasing of bearings of the main electric motor of the vehicle can be indicated. The semi-solid lubricant has a viscosity greater than or equal to a predetermined value, and the semi-solid lubricant does not move due to gravity or the weight of the semi-solid lubricant. In the present embodiment, grease is used as the semi-solid lubricant.

The main electric motor of the vehicle includes: a stator 3 that has a coil 2, a rotor 4 that opposes the stator 3, and a frame 5 that surrounds the stator 3 and the rotor 4. A rotation shaft 6 is arranged so as to pass through the center of the rotor 4, and transmits rotation of the rotor 4 to the exterior of the main electric motor of the vehicle. A ball bearing 7 and a roller bearing 8 support the rotation shaft 6. Annular grease pockets 9 are each arranged in the vicinities of the ball bearing 7 and the roller bearing 8. The grease pocket 9 has any desired shape. During the assembly of the main electric motor of the vehicle, grease is used to fill the spaces of the ball bearing 7 and the roller bearing 8, and a predetermined amount of the grease fills the grease pockets 9. During the assembly of the main electric motor of the vehicle, for example, about half of the grease pocket 9 is filled with grease.

The greasing mechanism 1 is equipped with the grease-filled greasing tube 10, which has one end thereof connected to the ball bearing 7 or the roller bearing 8 and has a greasing port arranged at the other end. The greasing mechanism 1 is further equipped with: an indicator part 11, arranged in the greasing tube 10, for indicating the status of greasing, and a nipple 12 attached to the greasing port. Grease also fills a space within the nipple 12.

The direction of attachment of the greasing mechanism 1 to the main electric motor of the vehicle is any desired direction. For example, in the case of attachment of the greasing mechanism 1 to the main electric motor of an electric railway vehicle, due to performance of maintenance work on the main electric motor of the vehicle from a pit arranged below the rails, the greasing mechanism 1 is attached such that the greasing port is positioned vertically downward. Further, although any desired position is used for arrangement of the indicator part 11, from the exterior, checking of the status of greasing is easy due to arrangement of the indicator part 11 in the vicinity of the nipple 12.

FIG. 2 is a drawing illustrating an example configuration of the greasing mechanism according to the embodiment. Inside the greasing tube 10, the greasing mechanism 1 is equipped with an indicator member 13 that has a specific gravity that is less than the specific gravity of the grease. The indicator member 13 is arranged at a determined first position within the greasing tube 10 filled with the grease. The indicator member 13 has any desired shape. The grease is a semi-solid, and thus the indicator member 13 that has the specific gravity that is less than the specific gravity of the grease does not move within the greasing tube 10 filled with the grease. However, due to flowing of the grease upon application of a force greater than or equal to a predetermined force, the grease and the indicator member 13 move within the greasing tube 10 during greasing from a grease gun.

As illustrated in FIG. 2, an indicator window 14 is arranged in a portion of the greasing tube 10 that includes a second position. The indicator window 14 is formed of a component that at least partially transmits visible light, and from the exterior of the greasing tube 10, enables visual confirmation of the movement of the indicator member 13 arranged within the greasing tube 10. For example, maintenance personnel can look at the indicator window 14, and when the indicator member 13 is positioned at the first position as indicated in FIG. 2, the maintenance personnel can determine that grease is not supplied.

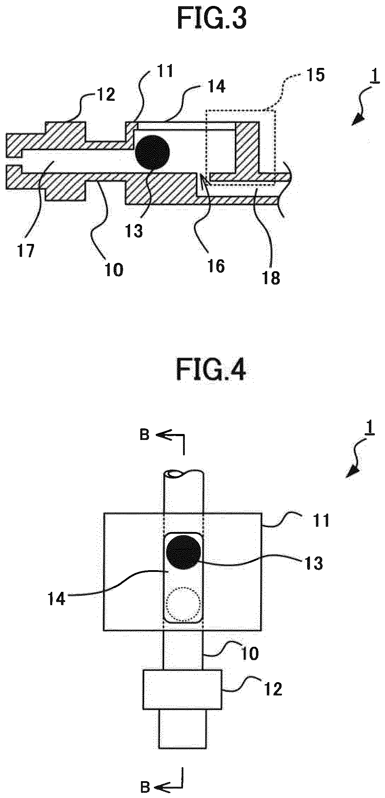

The greasing mechanism 1 includes a retaining part 15 that is shaped so as to stop at the second position the indicator member 13 that moves in the greasing direction due to pressure of the grease during greasing. FIG. 3 is a cross sectional drawing of the greasing mechanism according to the embodiment. FIG. 3 is a cross sectional view taken along the A-A line of the greasing mechanism 1 illustrated in FIG. 2. The greasing tube 10 is configured to include: a first tube 17, that has a closed end, that has a greasing port arranged at the other end, and that has an opening part 16 in a side surface along the greasing direction, and a second tube 18 that has one end connected to the ball bearing 7 or the roller bearing 8 and has the other end connected to the opening part 16 of the first tube 17. In the example of FIG. 3, the greasing tube 10 is equipped with one each of the first tube 17 and the second tube 18. The retaining part 15 is a portion of the first tube 17 that includes the closed end of the first tube 17. Movement of the indicator member 13 during greasing is stopped by the retaining part 15 by use of the closed end (second position) of the first tube 17.

The opening part 16 is arranged at a position separated by a predetermined distance from the second position, and shape of the opening part 16 prevents entry of the indicator member 13. For example, in the case of a spherically shaped indicator member 13, the opening part 16 may have a circular cross-sectional shape and may have a cross-sectional diameter smaller than the diameter of the indicator member 13. The opening part 16 has a shape that prevents entry of the indicator member 13, and thus only grease flows into the second tube 18 during greasing. The position of arrangement of the opening part 16 is determined such that the indicator member 13 does not prevent the flowing of grease to the second tube 18.

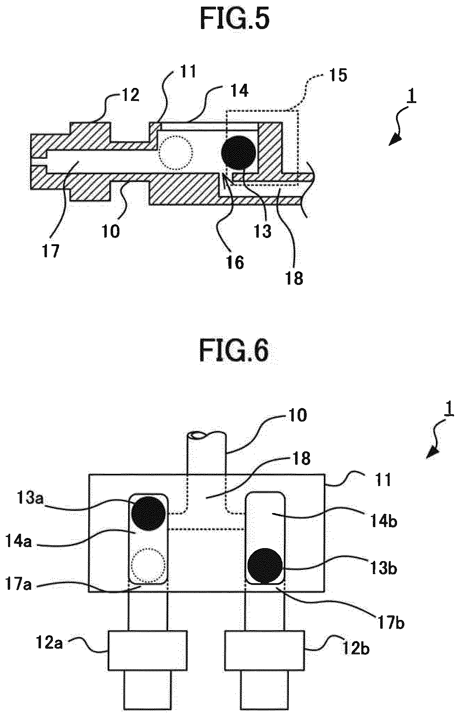

Due to pressure of the grease during greasing, the indicator member 13 moves in the greasing direction from the first position illustrated in FIG. 2 and FIG. 3. FIG. 4 is a drawing that illustrates the movement of the indicator member according to the embodiment. FIG. 5 is a cross sectional drawing illustrating movement of the indicator member according to the embodiment. FIG. 5 is a cross-sectional view taken along the B-B line of the greasing mechanism 1 illustrated in FIG. 4. Due to pressure of grease during greasing, the indicator member 13 moves in the greasing direction from the first position illustrated by the dotted line in FIG. 4 and FIG. 5, and arrives at the second position. After completion of greasing, the indicator member 13 is retained at the second position. For example, the maintenance personnel can determine that grease is previously supplied by looking at the indicator window 14 and determining that there is previous greasing when the indicator member 13 is at the second position as illustrated in FIG. 4.

The indicator member 13 that moves due to pressure of grease during greasing is arranged within the greasing tube 10, and the retaining part 15 is provided that retains the moved indicator member 13. Thus the greasing mechanism 1 enables the display of the status of greasing of the bearing.

FIG. 6 is a drawing illustrating another example configuration of the greasing mechanism according to the embodiment. In the aforementioned example, the greasing mechanism 1 indicates whether the greasing is previously performed. However, the example of FIG. 6 enables the indication of the number of times that grease is previously supplied. The greasing tube 10 illustrated in FIG. 6 includes two first tubes 17a and 17b, and the second tube 18. One end of the second tube 18 is connected to the ball bearing 7 or the roller bearing 8, and the other ends are connected to the respective opening parts 16 of the first tubes 17a and 17b. When greasing is performed from the greasing port to which the nipple 12a is attached, an indicator member 13a moves from the first position to the second position. On the other hand, an indicator member 13b is located at the first position. For example, when the maintenance personnel look at indicator windows 14a and 14b, in the case in which only the indicator 13a has moved as illustrated in FIG. 6, the maintenance personnel can determine that the greasing is previously performed one time.

The next greasing is performed from the greasing port to which a nipple 12b is attached, and the indicator member 13b moves from the first position to the second position. When the greasing is performed twice, both the indicator members 13a and 13b are positioned at the second position. For example, if the maintenance personnel look at the indicator windows 14a and 14b and see that both of the indicator members 13a and 13b are moved, then the maintenance personnel can determine that the greasing is previously performed twice. The number of first tubes 17 is not limited to two, and any desired number may be used.

As described above, the greasing mechanism 1 according to the embodiment has the indicator member 13 arranged within the greasing tube 10, and this enables the use of a simple configuration for indication of the status of greasing of the bearing.

The embodiments of the present disclosure are not limited to the aforementioned embodiment. The greasing tube 10 may be cylindrically shaped, and the retaining part 15 arranged within the greasing tube 10 may be a mesh-like circular plate or a projection that allows passage only of grease.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Reference Signs List

1 Greasing mechanism for main electric motor of vehicle
2 Coil
3 Stator
4 Rotor
5 Frame
6 Rotation shaft
7 Ball bearing
8 Roller bearing
9 Grease pocket
10 Greasing tube
11 Indicator part
12, 12a, 12b Nipple
13, 13a, 13b Indicator member
14, 14a, 14b Indicator window
15 Retaining part
16 Opening part
17, 17a, 17b First tube
18 Second tube

## Claims

1. A greasing mechanism for a main electric motor of a vehicle, comprising:
a greasing tube having one end connected to a bearing of the main electric motor of the vehicle and having a greasing port arranged at another end, the greasing tube being filled with a semi-solid lubricant;
an indicator member, arranged at a predetermined first position within the greasing tube filled with the semi-solid lubricant, and having a specific gravity less than a specific gravity of the semi-solid lubricant; and
a retaining part shaped to stop the indicator member at a second position when the indicator member moves in a greasing direction due to pressure of the semi-solid lubricant during greasing,
wherein a portion, including the second position, of the greasing tube is formed from a component that is at least partially transparent to visible light.

2. The greasing mechanism according to claim 1, wherein
the greasing tube includes a first tube having one closed end, the greasing port arranged at another end, and an opening part in a side surface along the greasing direction, and a second tube having one end connected to the bearing and another end connected to the opening part of the first tube;
the retaining part is shaped to stop the indicator member moving during greasing at the closed end of the first tube that is the second position, and is a portion of the first tube that includes the closed end of the first tube; and
the opening part is arranged at a position separated by a predetermined distance from the second position and is shaped to prevent entry of the indicator member.

3. The greasing mechanism according to claim 2, wherein
the indicator member is spherical;
the opening part has a circular cross-sectional shape; and
a cross-sectional diameter of the opening part is smaller than a diameter of the indicator member.
